# EUROPEAN PATENT APPLICATION

(11) **EP 1 852 631 A1**
(43) Date of publication of application: **07.11.2007**
(21) Application number: 06714268.7
(22) Date of filing: 22.02.2006
(51) Int. Cl.: F16F 15/08, F16F 1/38

(54) **VIBRATION ISOLATING DEVICE**

(30) Priority: 24.02.2005 JP 2005048330
(71) Applicant: Bridgestone Corporation, Tokyo 104-8340 (JP)
(72) Inventor: KAWASHIMA, Takashi, u, Yokohama-shi, Kanagawa, 2440812 (JP); OKAZIMA, Yoshichika, u, Yokohama-shi, Kanagawa, 2440812 (JP)
(74) Representative: Whalley, Kevin
(86) International application number: PCT/JP2006/303128
(87) International publication number: WO 2006/090720

(57) **Abstract**

[Problems] To obtain a vibration isolating device in which a pressure-joint section of an elastic body does not move from a predetermined position in a bracket cylinder part even when the angular difference between a normal vibration input direction and a maximum input direction becomes large.

[Means to Solve the Problems] A rubber elastic body (18) is vulcanized and adhered to an outer peripheral surface of an inner cylinder (16), end portions of a pair of pressure-joint sections (26) of the elastic body (18) are pressure-joined to an inner peripheral surface of a bracket cylinder part (12), and the elastic body (18) is pressure-fitted into the bracket cylinder part (12) having a cylindrical shape. In radially inner portions of the bracket cylinder part (12) in contact with the end portions of the pair of pressure-joint sections (26), projecting curved portions (34) projecting in an L-shape with a height (H) that is equal to or larger than a plate thickness of the bracket cylinder part (12) are formed respectively across an entire width of the bracket cylinder part (12) along an axial direction (S).

## Description

### Technical Field

The present invention relates to a vibration isolating device in which a pressure-joint section of an elastic body does not move from a predetermined position in a bracket cylinder part even when the angular difference between a normal vibration input direction and a maximum input direction becomes large, and particularly relates to a vibration isolating device used as a general industrial machine, an engine mount for an automobile, a suspension bush for an automobile, or the like.

### Background Art

As a vibration isolating device used as an engine mount for an automobile, there is one having a rubber elastic body which couples an outer cylinder having a cylindrical shape and an inner cylinder disposed inside the outer cylinder, and a bracket metal part fixed to the outer cylinder. In such a vibration isolating device, for example the inner cylinder is coupled to an engine as a vibration generating unit, and the bracket metal part is coupled by bolts or the like to a vehicle body as a vibration receiving unit, and when vibration from the engine is transmitted to the inner cylinder, the inner cylinder is displaced relatively with respect to the outer cylinder along with deformation of the elastic body due to this vibration. As a result, the vibration energy is absorbed by inner friction of the elastic body, and thus transmission of vibration to the vehicle body is suppressed.

In FIG. 6 and FIG. 7 corresponding to Patent Document 1 taken as an example of a prior art vibration isolating device, there is shown a structure in which an elastic body 118 is vulcanized and adhered to an outer peripheral surface of an inner cylinder 116 to prevent disengagement of the elastic body 118 from the inner cylinder 116, and pressure-joint sections 126 of the elastic body 118, which is vulcanized and adhered to the inner cylinder 116, are pressure-fitted into an inner peripheral surface of a bracket cylinder part 112, which is an outer cylinder. Further, in these drawings, there is also shown a structure for fixing the bracket cylinder part 112 coupled to the inner cylinder 116 via the elastic body 118 to a bracket metal part 120 for coupling to an engine or vehicle body side.
Patent Document 1: Japanese Patent Application Laid-open No. 2000-193004

### Disclosure of the Invention

### Problems to Be Solved by the Invention

To absorb vibration energy with the above-described vibration isolating device efficiently, it is necessary to dispose the pressure-joint sections 126 so that the pressure-joint sections 126 of the elastic body 118 are perpendicular to a normal vibration input direction S1. Therefore, projections 122 projecting from the bracket cylinder part 112 are disposed on both sides of the pressure joint sections 126 for stopping rotation.

However, in an engine mount for an automobile, there may be a case that the normal vibration input direction S1 and a maximum input direction S2 do not always match. Then, when this vibration isolating device is used in the engine mount for an automobile in which the maximum input direction S2 of vibration is different from the normal vibration input direction S1, there is generated an external force F in a rotational direction such that the pressure-joint sections 126 of the elastic body 118 try to be perpendicular to the maximum input direction S2.

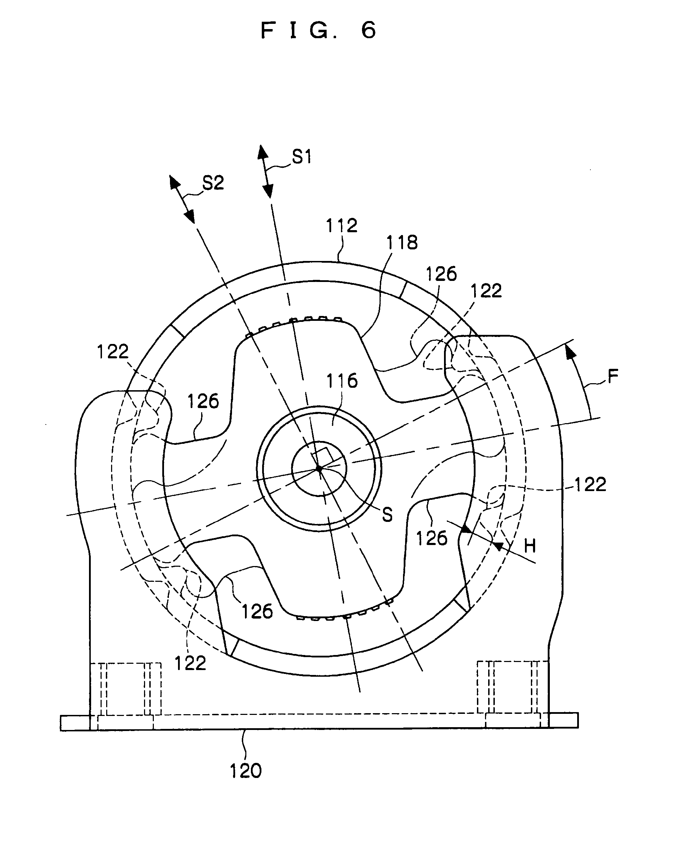

When the angular difference between the normal vibration input direction S1 and the maximum input direction S2 becomes as large as about 10 degrees or larger, restraint in the rotational direction cannot be made with heights H of the projections 122 to the extent of a plate thickness of the bracket cylinder part 112 constituting the vibration isolating device according to the prior art shown in FIG. 6. As a result, the above-described case has a drawback such that the pressure-joint sections 126 go over the projections 122 and the elastic body 118 rotates as shown by chain double dashed lines.

Specifically, the vibration isolating device of Patent Document 1 as a prior art is one such that the projections 122 for stopping rotation are made by impact of a punch or the like which is a hard metal tool. Therefore, an attempt to process the projections 122 with a height H equal to or larger than the thickness of the steel plate causes a hole to be made in the bracket cylinder part 112, and hence the heights H of the projections 122 can be set to only about the plate thickness of the bracket cylinder part 112.

In consideration of the above-described facts, an object of the present invention is to provide a vibration isolating device in which a pressure-joint section of an elastic body does not move from a predetermined position in a bracket cylinder part even when the angular difference between a normal vibration input direction and a maximum input direction becomes large.

### Means for Solving the Problems

A vibration isolating device according to claim 1 is characterized by having:
an inner cylinder formed in a cylindrical shape;
an elastic body which is adhered to an outer peripheral surface of the inner cylinder and has a pressure-joint section in a projecting shape on an outer peripheral side;
a bracket cylinder part in which the elastic body is pressure-fitted with the pressure-joint section being in contact with an inner peripheral side, and which supports the inner cylinder via the elastic body; and
projecting curved portions formed across an entire width in radially inner portions of the bracket cylinder part which are in contact with an end portion of the pressure-joint section, the projecting curve portions projecting with a height that is equal to or larger than a plate thickness of the bracket cylinder part.

The operation of the vibration isolating device according to claim 1 will be explained below.
In this claim, an elastic body adhered to an outer peripheral surface of an inner cylinder formed in a cylindrical shape has a pressure-joint section in a projecting shape on an outer peripheral side. By pressure-fitting this elastic body with the pressure-joint section being in contact with an inner peripheral side of a bracket cylinder part, this bracket cylinder part is made to support the inner cylinder via the elastic body. Then, projecting curved portions projecting with a height that is equal to or larger than a plate thickness of the bracket cylinder part are formed across an entire width in radially inner portions of the bracket cylinder part at positions in contact with an end portion of the pressure-joint section of the elastic body.

Therefore, in this claim, since the projecting curved portions project across the entire width in the radially inner portions of the bracket cylinder part, as different from projections 122 of a prior art for stopping rotation formed by impact processing by a punch or the like, the projecting curved portions can be made easily by bending processing even with a height equal to or larger than the plate thickness of the bracket cylinder part.

From the above, according to the vibration isolating device according to this claim, since the projecting curved portions can be formed easily with a height equal to or larger than the plate thickness of the bracket cylinder part which are required heights, even when the angular difference between a normal vibration input direction and a maximum input direction becomes large and an external force in the rotational direction operates, the stopper function improves. As a result, it is not possible that the pressure-joint section of the elastic body goes over the projecting curved portions of the bracket cylinder part, and the pressure-joint section moves along the inner peripheral side of the bracket cylinder part.

The operation of the vibration isolating device according to claim 2 will be explained below.
This claim has a structure similar to claim 1 and exhibits similar operation. However, in this claim, the structure has a bracket metal part to which the bracket cylinder part is fixed, in which the inner cylinder is coupled to one of a vibration generating unit and a vibration receiving unit, and the bracket metal part is coupled to the other one of the vibration generating unit and the vibration receiving unit.

Namely, the structure of this claim has a bracket metal part to which the bracket cylinder part is fixed, the inner cylinder is coupled to one of a vibration generating unit and a vibration receiving unit, and the bracket metal part is coupled to the other one of them. Accordingly, when the vibration generating unit generates vibration, the vibration is transmitted to the elastic body via either one of the inner cylinder and the bracket metal part. Then, the vibration is absorbed by deformation of the elastic body along with relative movement between the inner cylinder and the bracket metal part, which makes it difficult for the vibration to be transmitted to the vibration receiving unit which is coupled to the other one of the inner cylinder and the bracket metal part.

The operation of the vibration isolating device according to claim 3 will be explained below.
This claim has a structure similar to claim 1 and exhibits similar operation. However, in the structure of this claim, the bracket metal part has a pair of side plate portions sandwiching both end faces in an axial direction of the bracket cylinder part, and a part of each of the pair of side plate portions extends toward an axial center side than an inner peripheral surface of the bracket cylinder part, and a part of each of the side plate portions faces a side face in an axial direction of the elastic body.

Namely, in this claim, even when an external force along the axial direction operates on the elastic body pressure-fitted into the bracket cylinder part, movement of the elastic body in the axial direction is restricted by the side plate portions, and the elastic body does not move outward from the end faces in the axial direction of the bracket cylinder part. Along with this, besides the operation of claim 1, it is not possible for the elastic body to disengage from the bracket cylinder part.

The operation of the vibration isolating device according to claim 4 will be explained below.
This claim has a structure similar to claim 1 and exhibits similar operation. However, in the structure of this claim, a pair of the pressure-joint sections of the elastic body exists at positions sandwiching a center portion of the elastic body. Namely, in this claim, by the existence of the pair of the pressure-joint sections at positions sandwiching a center portion of the elastic body respectively, the elastic body can be pressure-fitted into the bracket cylinder part more securely.

A vibration isolating device according to claim 5 is characterized by having:
an inner cylinder formed in a cylindrical shape;
an elastic body which is adhered to an outer peripheral surface of the inner cylinder and has a pressure-joint section in a projecting shape on an outer peripheral side;
a pair of half-cylinder members each formed in a substantially half-cylinder shape in which a vicinity of an end portion is in a straight shape;
a bracket cylinder part formed by combining the pair of half-cylinder members in a shape with a joint section being a bent shape, in which the elastic body is pressure-fitted with the pressure-joint section being in contact with a position on an inner peripheral side corresponding to the joint section, and which supports the inner cylinder via the elastic body; and
a projecting curved portion formed in a projecting shape across an entire width in a radially inner portion of the bracket cylinder part which is in contact with an end portion of the pressure-joint section.

The operation of the vibration isolating device according to claim 5 will be explained below.
In this claim, an elastic body adhered to an outer peripheral surface of the inner cylinder formed in a cylindrical shape has a pressure-joint section in a projecting shape on an outer peripheral side. Further, a pair of half-cylinder members each formed in a substantially half-cylinder shape in which a vicinity of an end portion in a straight shape is combined to form a bracket cylinder part. However, at this time, along with that the vicinity of the end portion is made as a straight shape, the joint section is made as a bent shape.

Also, by pressure-fitting the elastic body with the pressure-joint section being in contact with a position on an inner peripheral side of the bracket cylinder part corresponding to the joint section, the bracket cylinder part supports the inner cylinder via the elastic body. Then, at a position in contact with the end portion of the pressure-joint section of the elastic body, the projecting curved portion projects across the entire width of the radially inner portion of the bracket cylinder part.

Therefore, in this claim, since the projecting curved portion projects across the entire width on the radially inner portion of the bracket cylinder part, the projecting curved portion can be made easily, similarly to claim 1. Meanwhile, by making the vicinities of the end portions of the half-cylinder members in a straight shape along with making the bracket cylinder part as a separation type constituted of the pair of half-cylinder members, the butted joint section has a bent shape, which can additionally enhance the stopper function of the elastic body in contact with this joint section. Further, by constituting the bracket cylinder part by the pair of half-cylinder members each having a half-cylinder shape, the bracket cylinder part can be processed more easily, and also the productivity of the vibration isolating device can be improved.

From the above, according to the vibration isolating device according to this claim, the bracket cylinder part is constituted of the pair of half-cylinder members in which the vicinities of the end portions are made as a straight shape, and has the projecting curved portion. Accordingly, even when the angular difference between a normal vibration input direction and a maximum input direction becomes large and an external force in the rotational direction operates, the stopper function improves. As a result, it is not possible that the pressure-joint section of the elastic body goes over the joint section and the projecting curved portion of the bracket cylinder part, and the pressure-joint section moves along the inner peripheral side of the bracket cylinder part.

The operation of the vibration isolating device according to claim 6 to claim 8 will be explained below.
These claims have structures similar to claim 5 and exhibit similar operation. However, since these claims have structures similar to claim 2 to claim 4, these claims also exhibit the operation similar to claim 2 to claim 4.

### Effect of the Invention

As described above, according to the above structures of the present invention, the present invention has an excellent effect of providing a vibration isolating device in which a pressure-joint section of an elastic body does not move from a predetermined position in a bracket cylinder part even when the angular difference between a normal vibration input direction and a maximum input direction becomes large. Further, for example, the present invention exhibits particularly excellent effects in a vibration isolating device used as a general industrial machine, an engine mount for an automobile, a suspension bush for an automobile, or the like.

### Brief Description of Drawings

[FIG. 1] is a side view showing a vibration isolating device according to a first embodiment of the present invention;
[FIG. 2] is a perspective view showing the vibration isolating device according to the first embodiment of the present invention;
[FIG. 3] is an exploded perspective view showing the vibration isolating device according to the first embodiment of the present invention;
[FIG. 4] is a side view showing a vibration isolating device according to a second embodiment of the present invention;
[FIG. 5] is a perspective view showing the vibration isolating device according to the second embodiment of the present invention;
[FIG. 6] is a side view showing a vibration isolating device according to a prior art; and

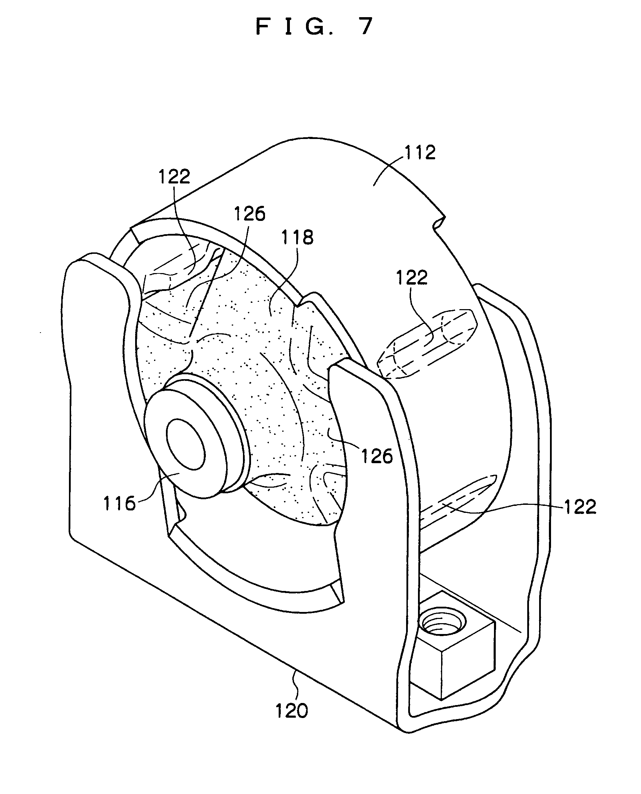

[FIG. 7] is a perspective view showing the vibration isolating device according to the prior art.

### Explanation of Codes

- 10: vibration isolating device
- 12: bracket cylinder part
- 16: inner cylinder
- 18: elastic body
- 20: bracket metal part
- 22: side plate portion
- 24: side plate portion
- 26: pressure-joint section
- 34: projecting curved portion
- 36: half-cylinder member
- 36A: straight portion
- 38: joint section

### Best Mode for Carrying Out the Invention

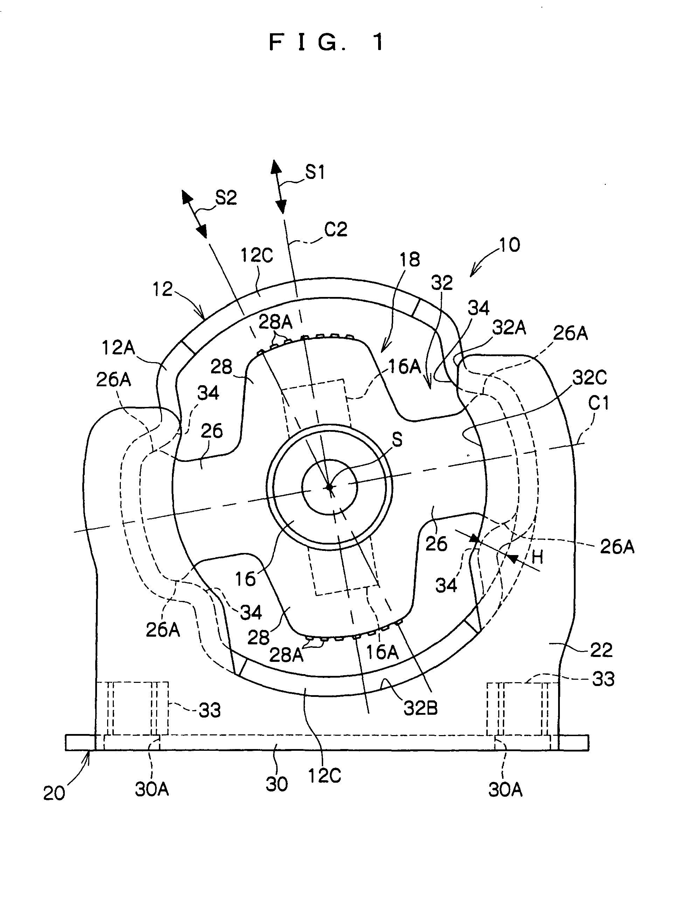

A vibration isolating device according to a best mode of the present invention will be described with reference to the drawings. First, a first embodiment of the vibration isolating device according to the best mode of the present invention is shown in FIG. 1 to FIG. 3, and this embodiment will be explained based on these drawings.
As shown in Fig. 1 to Fig. 3, a vibration isolating device 10 of a so-called bush type according to this embodiment applied as an engine mount for an automobile has, in a center portion thereof, an inner cylinder 16 having a cylindrical shape and being coupled to an engine (not shown) as a vibration generating unit. Further, at an intermediate portion in an axial direction on an outer peripheral surface of the inner cylinder 16, there is provided a pair of stopper support parts 16A projecting in a radial direction respectively. Then, the pair of stopper support parts 16A is formed in a substantially rectangular parallelepiped block shape and disposed respectively at positions symmetrical to each other about an axial center S shown in FIG. 1.

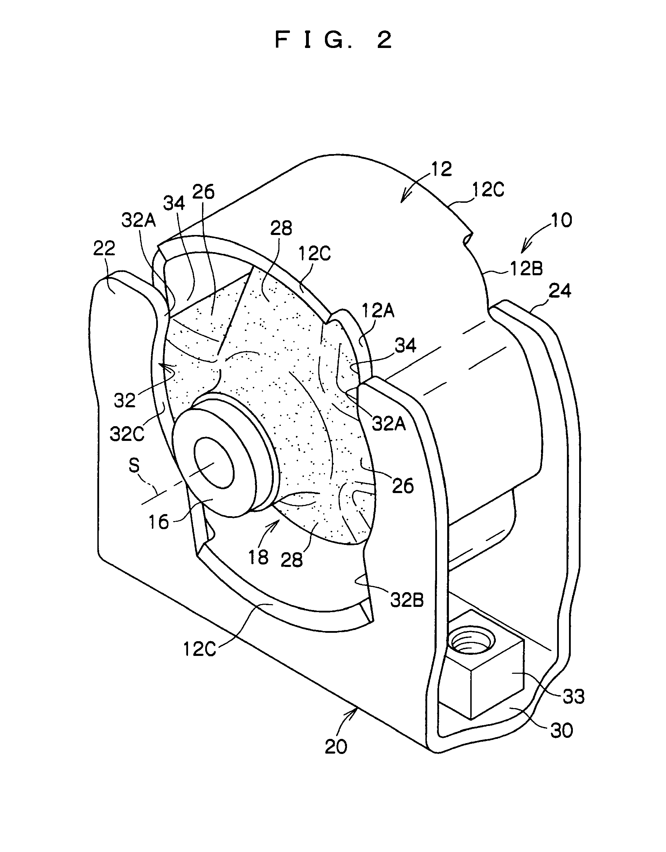

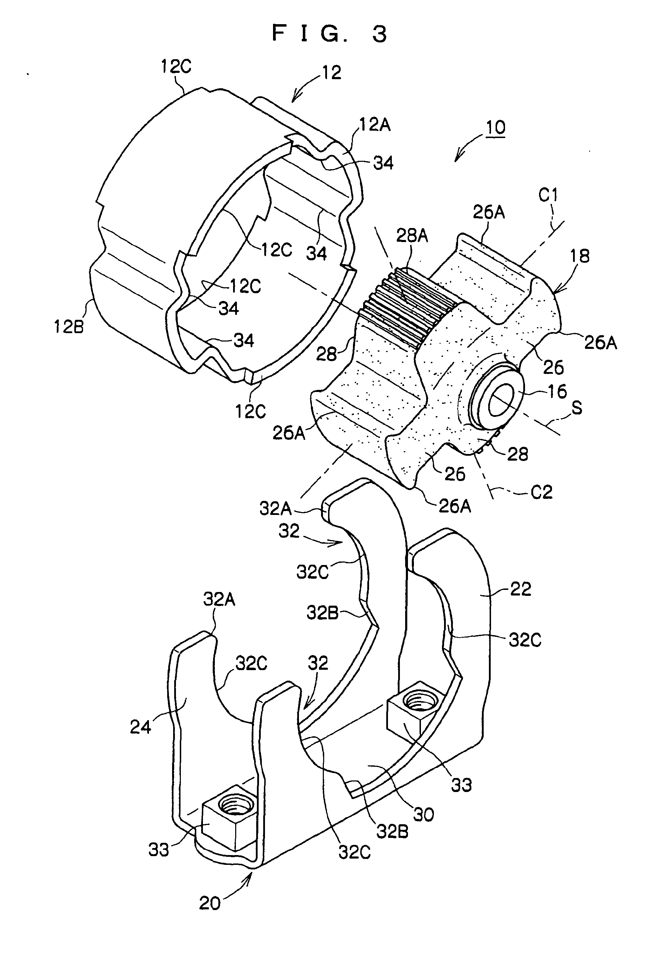

On an outer peripheral side of the inner cylinder 16, there is disposed a bracket cylinder part 12 made of metal such as stainless steel in a cylindrical shape. Further, as shown in FIG. 2 and FIG. 3, there is provided a pair of positioning portions 12C, which are portions of a cylinder wall section projected in the same shape with each other in the axial direction from end faces 12A, 12B in both sides in the axial direction of the bracket cylinder part 12 along the axial center S, at symmetrical positions with each other about the axial center S of the bracket cylinder part 12 respectively. Note that the inner cylinder 16 has a smaller diameter with respect to the bracket cylinder part 12, and formed slightly longer in the axial direction.

To the outer peripheral surface of the inner cylinder 16, a rubber elastic body 18 formed in a substantially X shape extending in a radial direction respectively is vulcanized and adhered, and in an assembled state shown in FIG. 1, this elastic body 18 is pressure-fitted into the bracket cylinder part 12. Namely, the shape of this elastic body 18 shown in FIG. 1 is a shape which extends in directions of center axes C1, C2 orthogonal to each other about the axial center S respectively.

Specifically, along the center axis C1 among them, a pair of pressure-joint sections 26 is extended respectively, and end portions of the pair of pressure-joint sections 26 are pressure-joined to an inner peripheral surface of the bracket cylinder part 12. Also, a pair of stopper sections 28 covering the stopper support parts 16A of the inner cylinder 16 is extended along the center axis C2 of the elastic body 18 respectively, and end portions of the pair of stopper sections 28 face the inner peripheral surface of the bracket cylinder part 12 respectively.

Shapes of the pressure-joint sections 26 shown in FIG. 1 are a rectangular shape which is elongated along the center axis C1, and the end portions of the pressure-joint sections 26 are each provided with projecting portions 26A projecting outward in a circumferential direction so that a width thereof in the circumferential direction is wider than the width of a base end portion side. Accordingly, without making a spring constant of the elastic body 18 along the central axis C1 larger than necessary, sufficiently large areas can be assured as contact areas of the pressure-joint sections 26 with the inner peripheral surface of the bracket cylinder part 12.

Further, contact surfaces of the pressure-joint sections 26 with the bracket cylinder part 12 before pressure-fitting into the bracket cylinder part 12 are made in a curved surface in a projecting shape having a radius of curvature which is slightly smaller than a radius of curvature of the inner peripheral surface of the bracket cylinder part 12. Also, the length of an end portion of the elastic body 18 in the axial direction is set equal to the distance between the two end faces 12A, 12B of the bracket cylinder part 12, and a natural length of the elastic body 18 along the center axis C1 is set longer by a predetermined length than an inside diameter of the bracket cylinder part 12. Thus, the elastic body 18 is compressed along the center axis C1 by an amount of difference between the natural length of the elastic body 18 along the center axis C1 and the inside diameter of the bracket cylinder part 12, and with a pressurizing force corresponding to this compressing amount, the pressure-joint sections 26 are pressure-joined to the inner peripheral surface of the bracket cylinder part 12.

As shown in FIG. 1 to FIG. 3, in radially inner portions of the bracket cylinder part 12 in contact with the end portions of the pair of pressure-joint sections 26 of the vibration isolating device 10 according to this embodiment, projecting curved portions 34 projecting in an L-shape with a height H that is equal to or larger than the plate thickness of the bracket cylinder part 12 are formed respectively across the entire width of the bracket cylinder part 12 along the axial direction S.

Specifically, on the inner peripheral surface of the bracket cylinder part 12, there are provided four of projecting curved portions 34 in total, in which a pair of projecting curved portions 34 is disposed corresponding to one pressure-joint section 26 of the elastic body 18, and a remaining pair of projecting curved portions 34 is disposed corresponding to the other pressure-joint section 26. As a result, in a state that the elastic body 18 is pressure-fitted into the bracket cylinder part 12, the pairs of projecting curved portions 34 come in contact respectively with the projecting portions 26A as both end portions of the pressure-joint sections 26 along the inner peripheral surface of the bracket cylinder part 12.

On the other hand, widths of the stopper sections 28 in the circumferential direction are made sufficiently wider than the pressure-joint sections 26, but wall thicknesses of portions of the stopper sections 28 along the center axis C2 are made thinner by the stopper support parts 16A of the inner cylinder 16. Along with this, a natural length of the elastic body 18 along the center axis C2 is made shorter by a predetermined length than the inside diameter of the bracket cylinder part 12. Accordingly, an external force is not operating between the inner cylinder 16 and the bracket cylinder part 12, and in a restored state in which the elastic body 18 is not elastically deformed, the end portions of the stopper sections 28 are separated from the inner peripheral surface of the bracket cylinder part 12 as shown in FIG. 1.

Then, although end faces of the stopper sections 28 are each made as a curved surface in a projecting shape having a radius of curvature which is smaller than the radius of curvature of the inner peripheral surface of the bracket cylinder part 12, projections 28A having a rib-shape extending in the axial direction are provided at predetermined pitches along the circumferential direction on the end faces of the stopper sections 28, as shown in FIG. 3.

A bracket metal part 20 is fixed to a vehicle body (not shown) as a vibration receiving unit, and this bracket metal part 20 has a structure in which side plate portions 22, 24 are bent perpendicularly from both end portions in the axial direction of a bottom plate portion 30, by bending a metal plate of stainless steel or the like as shown in FIG. 3.

On both end portions of this bottom plate portion 30, penetration holes 30A penetrating in a plate thickness direction are formed respectively, and on an upper face of the bottom plate portion 30, nuts 33 each in a block shape are fixed by welding or the like on the pair of penetration holes 30A. Therefore, when the bracket metal part 20 is fixed to a vehicle body, bolts (not shown) inserted through a flange portion provided on the vehicle body side are screwed into the nuts 33 from the bottom face side of the bracket metal part 20, thereby fixing the bracket metal part 20 to the vehicle body.

The pair of side plate portions 22, 24 of the bracket metal part 20 is arranged in parallel to each other with a space interposed therebetween which is substantially equal to the distance between the end faces 12A, 12B of the bracket cylinder part 12, and formed to have same shapes with each other. Also, projecting lengths of the positioning portions 12C projecting from the end faces 12A, 12B of the bracket cylinder part 12 and plate thicknesses of the side plate portions 22, 24 are set substantially equal. Then, in central portions of the side plate portions 22, 24, opening portions 32 having a shape corresponding to the shape of the bracket cylinder part 12 are formed respectively.

Namely, these opening portions 32 are formed in a substantially U-shape with vicinities of upper end portions of the side plate portions 22, 24 shown in FIG. 1 to FIG. 3 being made as opening ends 32A, and at bottom portions of the opening portions 32 on sides opposite to the opening ends 32A, there are formed recessed portions 32B corresponding to the positioning portions 12C of the bracket cylinder part 12. Also, between the opening ends 32A and the recessed portions 32B on inner peripheral surfaces of the opening portions 32, there are formed curved surface portions 32C having a recessed shape with a radius of curvature which is smaller by a predetermined length than the radius of curvature of the inner peripheral surface of the bracket cylinder part 12.

The recessed portions 32B are recessed in a substantially U-shape outward in a radial direction from a virtual curved surface extended from the curved surface portions 32C, and bottom portions of the recessed portions 32B are made as a curved surface having a radius of curvature which is substantially equal to the radius of curvature of an outer peripheral surface of the bracket cylinder part 12. However, peripheral lengths of the bottom portions of the recessed portions 32B are set slightly longer than peripheral lengths of the outer peripheral surfaces of the positioning portions 12C of the bracket cylinder part 12 as shown in FIG. 1.

Here, a straight line connecting the center point of the opening ends 32A of the opening portions 32 in the circumferential direction and the center point of the bottom portions of the recessed portions 32B in the circumferential direction is slanted by a predetermined degree with respect to the bottom plate portion 30 of the bracket metal part 20, and the opening portions 32 take the straight line as a symmetry axis and made to have a shape symmetrical about the symmetry axis. Also, in the vibration isolating device 10 in an assembled state, as shown in FIG. 1, the elastic body 18 is fixed so that the center axis C2 of the stopper sections 28 matches with the symmetry axis of the opening portions 32 when viewed from the axial direction.

Also, in a vehicle to which the vibration isolating device 10 of this embodiment is applied, a major part of a load due to the weight of the engine is supported by not-shown other vibration isolating devices or the like. Therefore, even in a mounted state that the engine is mounted on the vibration isolating device 10, when vibration from the engine is not transmitted to the vibration isolating device 10, the bracket cylinder part 12 and the inner cylinder 16 are kept at positions which are substantially coaxial with each other. Similarly, also in the mounted state, when vibration from the engine is transmitted to the vibration isolating device 10, the elastic body 18 deforms and the bracket cylinder part 12 and the inner cylinder 16 displace relatively.

Next, the operation of the vibration isolating device 10 according to this embodiment will be explained.
In this embodiment, the elastic body 18 is fixed to the outer peripheral surface of the inner cylinder 16 which is formed in a cylindrical shape and is coupled to an engine, and this elastic body 18 has the pair of pressure-joint sections 26 having projecting shapes on an outer peripheral side thereof. Further, with the pair of pressure-joint sections 26 being in contact with an inner peripheral side of the bracket cylinder part 12, the elastic body 18 is pressure-fitted without bonding, and thereby the bracket cylinder part 12 supports the inner cylinder 16 via the elastic body 18.

Then, at positions in contact with the end portions of the pair of pressure-joint sections 26 of the elastic body 18 respectively, across the entire width of the radially inner portions of the bracket cylinder part 12, the projecting curved portions 34 projecting in an L-shape with a height that is equal to or larger than the plate thickness of the bracket cylinder part 12 are formed respectively. Also, in this structure, this bracket cylinder part 12 is fixed to the bracket metal part 20, and this bracket metal part 20 is coupled to the vehicle body.

Therefore, when vibration in a vibration input direction S1 along the center axis C2 from the engine is transmitted to the inner cylinder 16, the vibration energy is absorbed by internal friction of the elastic body 18 along with elastic deformation of the elastic body 18 and the vibration is damped, which makes it difficult for the vibration to be transmitted to the vehicle body coupled to the bracket metal part 20. At this time, such absorption of vibration energy by the internal friction of the elastic body 18 is performed mainly by the elastic body 18 elastically deforming along the center axis C1. Also, when an excessive load is transmitted in a direction along the center axis C2 from the engine to the inner cylinder 16, the stopper sections 28 abut on the inner peripheral surface of the bracket cylinder part 12, thereby limiting elastic deformation of the stopper sections 28 in the direction along the center axis C2.

On the one hand, in this embodiment, the projecting curved portions 34 project across the entire width on the radially inner portions of the bracket cylinder part 12. Accordingly, as different from projections 122 of a prior art for stopping rotation formed by impact processing by a punch or the like, the projecting curved portions 34 can be made easily by bending processing even with a height equal to or larger than the plate thickness of the bracket cylinder part 12.

From the above, according to the vibration isolating device 10 according to this embodiment, the heights H of the projecting curved portions 34 can be formed easily with a height equal to or larger than the plate thickness of the bracket cylinder part 12 which are required heights. Accordingly, even when the angular difference between the normal vibration input direction S 1 and the maximum input direction S2 of vibration shown in FIG. 1 becomes large and an external force in the rotational direction about the axial center S operates, the stopper function improves. As a result, it is not possible that the pressure-joint sections 26 of the elastic body 18 go over the projecting curved portions 34 of the bracket cylinder part 12, and the pressure-joint sections 26 move along the inner peripheral side of the bracket cylinder part 12.

On the other hand, according to the vibration isolating device 10 of this embodiment, the pair of side plate portions 22, 24 of the bracket metal part 20 sandwich both the end faces 12A, 12B of the bracket cylinder part 12, and the curved surface portions 32C of the pair of side plate portions 22, 24 extend to the axial center S side from the inner peripheral surface of the bracket cylinder part 12 respectively to face the side faces of the pressure-joint sections 26 of the elastic body 18.

Therefore, even when an external force along the axial center S operates on the elastic body 18 pressure-fitted into the bracket cylinder part 12, movement of the elastic body 18 in the axial direction is restricted by the side plate portions 22, 24, and the elastic body 18 does not move outward from the end faces in the axial direction of the bracket cylinder part 12. Along with this, it is not possible for the elastic body 18 to disengage from the bracket cylinder part 12. Note that in this embodiment, by the existence of the pair of the pressure-joint sections 26 at positions sandwiching a center portion of the elastic body 18 respectively, the elastic body 18 can be pressure-fitted into the bracket cylinder part 12 more securely.

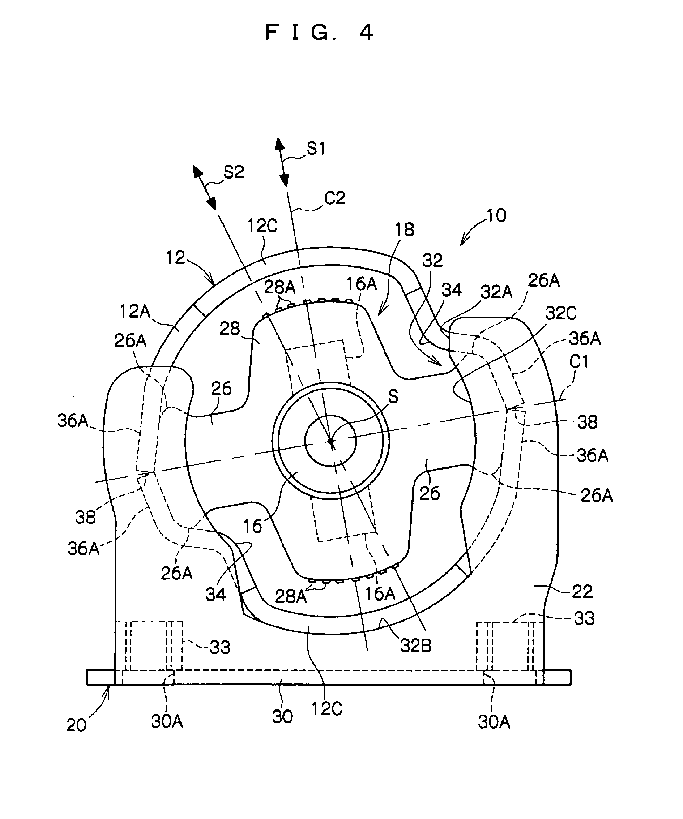

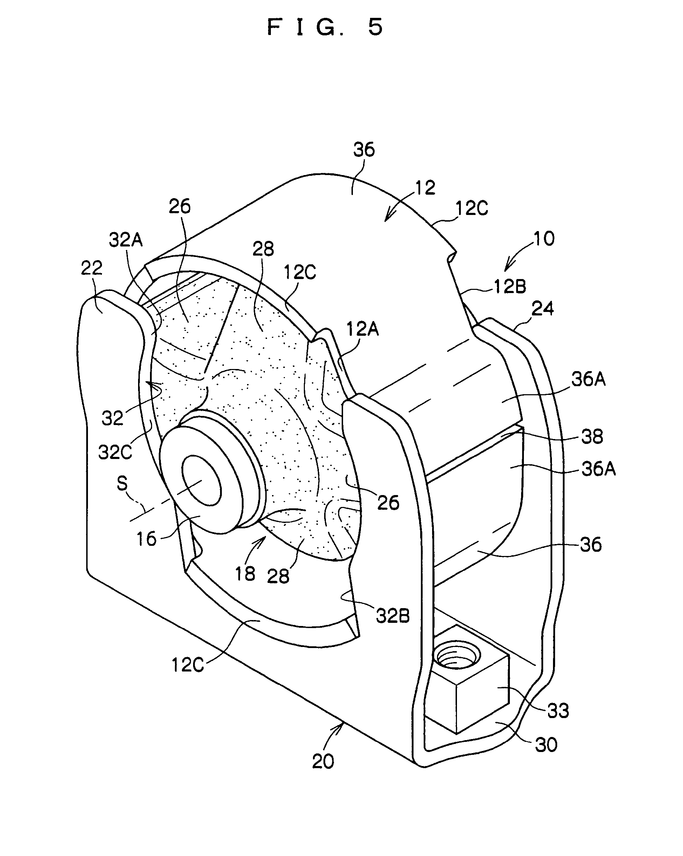

Next, a second embodiment of a vibration isolating device according to a best mode of the invention is shown in FIG. 4 and FIG. 5, and this embodiment will be described based on these drawings. Note that same members as those explained in the first embodiment are designated the same codes, and duplicating explanations are omitted.
As shown in FIG. 4 and FIG. 5, a vibration isolating device 10 according to this embodiment has a structure which is substantially similar to the vibration isolating device 10 of the first embodiment, but the bracket cylinder part 12 is constructed of a pair of half-cylinder members 36, which are each formed in a substantially half-cylinder shape in which the vicinity of an end portion is made as a straight portion 36A in a straight shape.

Then, when the bracket cylinder part 12 is formed, joint sections 38 which are sections to join the pair of half-cylinder members 36 are welded or the like in a bending shape, and thereby the pair of half-cylinder members 36 is combined. Also, the elastic body 18 is pressure-fitted with the pressure-joint sections 26 being in contact with positions on an inner peripheral side corresponding to the joint sections 38. Further, the vibration isolating device 10 according to this embodiment has a structure such that one projecting curved portion 34 is disposed per one pressure-joint section 26 of the elastic body 18.

Next, the operation of the vibration isolating device 10 according to this embodiment will be explained.
In this embodiment, the pair of half-cylinder members 36 each formed in a substantially half-cylinder shape in which a vicinity of an end portion is in a straight shape is combined to form the bracket cylinder part 12. However, at this time, along with that the vicinity of the end portion is made as a straight shape, the joint sections 38 are made as a bent shape.

Also, by pressure-fitting the elastic body 18 with the pressure-joint sections 26 being in contact with positions on the inner peripheral side of the bracket cylinder part 12 corresponding to the joint sections 38, the bracket cylinder part 12 supports the inner cylinder 16 via the elastic body 18. Then, at the positions in contact with the end portions of the pressure-joint sections 26 of the elastic body 18, the projecting curved portions 34 project in an L-shape across the entire width of the radially inner portions of the bracket cylinder part 12.

As a result, in this embodiment, since the projecting curved portions 34 project across the entire width on the radially inner portions of the bracket cylinder part 12, the projecting curved portions 34 can be made easily, similarly to the first embodiment. Meanwhile, by forming the vicinities of the end portions of the half-cylinder members 36 in a straight shape along with making the bracket cylinder part 12 as a separation type constituted of the pair of half-cylinder members 36, the butted joint sections 38 have a bent shape, which can additionally enhance the stopper function of the elastic body 18 in contact with the joint sections 38. Further, by constituting the bracket cylinder part 12 by the pair of half-cylinder members 36 each having a half-cylinder shape, the bracket cylinder part 12 can be processed more easily, and the productivity of the vibration isolating device 10 can be improved.

From the above, according to the vibration isolating device 10 according to this embodiment, the bracket cylinder part 12 is constituted of the pair of half-cylinder members 36 in which the vicinities of the end portions are made as the straight portions 36A having a straight shape, and has the projecting curved portions 34. Accordingly, similarly to the first embodiment, it is not possible that the pressure-joint sections 26 of the elastic body 18 go over the joint sections 38 and/or the projecting curved portions 34 of the bracket cylinder part 12, and the pressure-joint sections 26 move along the inner peripheral side of the bracket cylinder part 12.

Note that the above embodiments has a structure such that the inner cylinder 16 is coupled to the vibration generating unit side and the bracket metal part 20 is coupled to the vibration receiving unit side, but an inversed structure is also possible. Also, without using the bracket metal part 20, the bracket cylinder part 12 may be coupled directly to the vibration receiving unit side.

On the other hand, the object in the above embodiments is isolation of vibration of an engine inputted to a vehicle body of a vehicle or the like, but the present invention may be used as a suspension bush for an automobile for example, or may be used for isolation of vibration for a general industrial machine or the like other than vehicles.

### Industrial Availability

The present invention can be used as a suspension bush for an automobile, or may be used for isolation of vibration for a general industrial machine or the like other than vehicles.

## Claims

1. A vibration isolating device, comprising:
an inner cylinder formed in a cylindrical shape;
an elastic body which is adhered to an outer peripheral surface of the inner cylinder and has a pressure-joint section in a projecting shape on an outer peripheral side;
a bracket cylinder part in which the elastic body is pressure-fitted with the pressure-joint section being in contact with an inner peripheral side, and which supports the inner cylinder via the elastic body; and
projecting curved portions formed across an entire width in radially inner portions of the bracket cylinder part which are in contact with an end portion of the pressure-joint section, the projecting curved portions projecting with a height that is equal to or larger than a plate thickness of the bracket cylinder part.

2. The vibration isolating device according to claim 1, further comprising:
a bracket metal part to which the bracket cylinder part is fixed,
wherein the inner cylinder is coupled to one of a vibration generating unit and a vibration receiving unit, and the bracket metal part is coupled to the other one of the vibration generating unit and the vibration receiving unit.

3. The vibration isolating device according to claim 2,
wherein the bracket metal part has a pair of side plate portions sandwiching both end faces in an axial direction of the bracket cylinder part, and
wherein a part of each of the pair of side plate portions extends toward an axial center side than an inner peripheral surface of the bracket cylinder part, and a part of each of the side plate portions faces a side face in an axial direction of the elastic body.

4. The vibration isolating device according to claim 1,
wherein a pair of the pressure-joint sections of the elastic body exists at positions sandwiching a center portion of the elastic body.

5. A vibration isolating device, comprising:
an inner cylinder formed in a cylindrical shape;
an elastic body which is adhered to an outer peripheral surface of the inner cylinder and has a pressure-joint section in a projecting shape on an outer peripheral side;
a pair of half-cylinder members each formed in a substantially half-cylinder shape in which a vicinity of an end portion is in a straight shape;
a bracket cylinder part formed by combining the pair of half-cylinder members in a shape with a joint section being a bent shape, in which the elastic body is pressure-fitted with the pressure-joint section being in contact with a position on an inner peripheral side corresponding to the joint section, and which supports the inner cylinder via the elastic body; and
a projecting curved portion formed in a projecting shape across an entire width in a radially inner portion of the bracket cylinder part which is in contact with an end portion of the pressure-joint section.

6. The vibration isolating device according to claim 5, further comprising:
a bracket metal part to which the bracket cylinder part is fixed,
wherein the inner cylinder is coupled to one of a vibration generating unit and a vibration receiving unit, and the bracket metal part is coupled to the other one of the vibration generating unit and the vibration receiving unit.

7. The vibration isolating device according to claim 6,
wherein the bracket metal part has a pair of side plate portions sandwiching both end faces in an axial direction of the bracket cylinder part, and
wherein a part of each of the pair of side plate portions extends toward an axial center side than an inner peripheral surface of the bracket cylinder part, and a part of each of the side plate portions faces a side face in an axial direction of the elastic body.

8. The vibration isolating device according to claim 5,
wherein a pair of the pressure-joint sections of the elastic body exists at positions sandwiching a center portion of the elastic body.
